(19) **Europäisches Patentamt European Patent Office Office européen des brevets**

(11) **EP 1 544 120 B1**

(12) **FASCICULE DE BREVET EUROPEEN**

(45) Date de publication et mention de la délivrance du brevet:
**09.07.2008 Bulletin 2008/28**

(51) Int Cl.:
**B65D 25/56** (2006.01)  **B65D 77/04** (2006.01)
**G01F 23/20** (2006.01)

(21) Numéro de dépôt: **04300889.5**

(22) Date de dépôt: **14.12.2004**

(54) **Ensemble comportant un dispositif de distribution et un boîtier permettant de connaître le degré de vidage du dispositif de distribution**

Abgabevorrichtung mit Füllstandsanzeiger

Fluid dispensing device with level indicator

(84) Etats contractants désignés:
**AT BE BG CH CY CZ DE DK EE ES FI FR GB GR HU IE IS IT LI LT LU MC NL PL PT RO SE SI SK TR**

(30) Priorité: **17.12.2003 FR 0351099**

(43) Date de publication de la demande:
**22.06.2005 Bulletin 2005/25**

(73) Titulaire: **L'ORÉAL**
**75008 Paris (FR)**

(72) Inventeurs:
• **Lasserre, Pierre**
**93470 Coubron (FR)**

• **Sanchez, Marcel**
**75015 Paris (FR)**

(74) Mandataire: **Tanty, François et al**
**Nony & Associés**
**3, rue de Penthièvre**
**75008 Paris (FR)**

(56) Documents cités:
**FR-A- 2 653 877**       **GB-A- 2 348 677**
**US-A- 4 876 891**      **US-A- 5 044 509**
**US-A- 5 125 466**

**Description**

La présente invention concerne notamment l'utilisation de dispositifs de distribution comportant au moins un récipient opaque contenant le produit à distribuer.

Une difficulté liée à l'emploi de tels contenants réside dans le fait qu'il est difficile pour l'utilisateur de connaître précisément le degré de vidage du récipient.

Or, dans certains domaines, notamment celui de la coloration capillaire, il est souhaitable de s'assurer que l'on dispose de la quantité de produit nécessaire au traitement envisagé avant d'entamer celui-ci.

En effet, le changement de dispositif de distribution en cours de traitement et les manipulations que cela implique si le coiffeur ne s'y est pas préparé peuvent être source d'inconfort pour le client et nuire à la qualité du résultat obtenu.

La demande de brevet français FR 2 653 877 décrit un dispositif dans lequel un récipient, dont le degré de remplissage est susceptible de varier, est disposé dans un boîtier rempli d'eau, comportant dans son fond un système élastique, le récipient étant soumis à la fois à la poussée d'Archimède due à l'eau présente dans le boîtier et à l'action du système élastique. Un tel dispositif est relativement complexe et coûteux à réaliser. En outre, le récipient n'est pas prévu pour être facilement enlevé du boîtier dans lequel il est reçu.

La demande GB 2 348 677 décrit un dispositif de distribution, comportant un conteneur pressurisé et un boîtier. Le dispositif peut être désassemblé pour utiliser le boîtier rempli d'eau pour l'évaluation de la quantité de produit contenu dans le conteneur pressurisé du dispositif de distribution.

La présente invention vise à offrir une solution au problème de l'évaluation du degré de vidage d'un dispositif de distribution, qui soit fiable, relativement peu coûteuse et aisée à mettre en oeuvre, dans les salons de coiffure notamment.

L'invention a ainsi pour objet, selon un premier de ses aspects parmi d'autres, un ensemble selon la revendication 1.

Le ratio

$$\frac{\text{section transversale du logement en partie supérieure}}{\text{section transversale du logement en partie inférieure}}$$

est par exemple supérieur à 1,1, mieux 1,2.

Grâce à l'invention, l'utilisateur du dispositif de distribution bénéficie d'un moyen relativement simple pour évaluer le degré de vidage de celui-ci.

La partie supérieure, élargie relativement à la partie inférieure, minimise les risques de débordement.

Dans une réalisation particulière, le boîtier peut être agencé pour permettre lorsqu'il est rempli de liquide, de lire le niveau du liquide dans celui-ci. Le boîtier peut notamment comporter une partie non opaque permettant de lire le niveau de liquide dans le boîtier.

Dans une réalisation particulière le ratio

$$\frac{\text{section transversale du logement en partie supérieure}}{\text{section transversale du logement en partie inférieure}}$$

est supérieur à 1,1, mieux 1,2.

Dans une réalisation particulière, le boîtier est réalisé d'une seule pièce par moulage de matière plastique, notamment dans une matière plastique transparente.

De préférence, la partie inférieure présente une section transversale correspondant sensiblement à celle du dispositif de distribution.

Ainsi, le dispositif de distribution peut déplacer, lorsqu'il est introduit dans le logement correspondant du boîtier, une hauteur relativement importante de liquide, ce qui permet de bénéficier d'une précision de lecture accrue.

Le ratio

$$\frac{\text{section transversale du logement}}{\text{section transversale du dispositif de distribution}}$$

section transversale du dispositif de distribution

mesuré par exemple sensiblement à un quart de la hauteur du logement à partir du fond du logement ou sensiblement à mi-hauteur du logement, peut ne pas excéder 1,5, mieux 1,2, voire 1,1.

Dans un exemple de mise en oeuvre de l'invention, les parties inférieure et supérieure du logement recevant le dispositif de distribution sont chacune sensiblement cylindriques, de génératrices parallèles. Les directrices peuvent être non circulaires, ces directrices étant par exemple sensiblement homothétiques et délimitant chacune une forme oblongue.

L'ensemble peut comporter un couvercle agencé pour se monter sur le boîtier.

Ce couvercle peut être pourvu d'une ouverture permettant le passage d'un embout du dispositif de distribution.

Le boîtier peut comporter, outre le premier logement destiné à recevoir le dispositif de distribution, un deuxième logement pour recevoir un accessoire, par exemple un peigne visant à étaler sur la chevelure le produit délivré par le dispositif de distribution. Le cas échéant, ce peigne peut servir à isoler au moins une mèche de cheveux.

Le deuxième logement peut être défini par une colonne dont le pied est séparé de la paroi du boîtier définissant le premier logement.

L'espace ménagé entre le pied de la colonne et le reste du boîtier peut faciliter l'accrochage éventuel de celui-ci sur un support, au cours de l'utilisation.

Le boîtier comporte avantageusement au moins deux repères correspondant à deux degrés de vidage du dispositif de distribution.

A la différence du dispositif décrit dans la demande de brevet français FR 2 653 877, le dispositif de distribution peut ne pas être soumis à l'action d'un système élastique, ce qui diminue le coût.

Le dispositif de distribution comporte par exemple au moins un récipient, notamment un récipient pressurisé, par exemple au moins deux récipients pressurisés contenant des produits à mélanger extemporanément, par exemple un colorant et un oxydant.

La partie inférieure du logement recevant le dispositif de distribution peut s'étendre sur une majeure partie de la hauteur du ou des récipients du dispositif de distribution, par exemple sur plus des trois quarts de la hauteur de celui-ci ou de ceux-ci.

La hauteur du boîtier peut correspondre sensiblement à la hauteur du dispositif de distribution jusque sous l'embout de distribution de celui-ci. Ainsi, lorsque le couvercle est monté sur le boîtier, l'embout de distribution peut être maintenu entre un bord supérieur du boîtier et le bord de l'ouverture du couvercle accueillant l'embout de distribution.

Selon un autre de ses aspects, l'invention a encore pour objet, indépendamment ou en combinaison avec ce qui précède, un ensemble comportant d'une part un dispositif de distribution contenant au moins un produit à distribuer et d'autre part un boîtier pour recevoir le dispositif de distribution en l'absence d'utilisation de celui-ci, ce boîtier comprenant au moins une partie non opaque permettant, lorsque le boîtier est rempli d'un liquide, de lire le niveau du liquide dans celui-ci. Le boîtier comporte un logement dans lequel est reçu le dispositif de distribution. Ce logement présente une partie inférieure ayant une section transversale correspondant sensiblement à celle de la portion du dispositif de distribution qui est engagée à l'intérieur.

Selon un autre de ses aspects, l'invention a encore pour objet, indépendamment ou en combinaison avec ce qui précède, un ensemble comportant d'une part un dispositif de distribution contenant au moins un produit à distribuer et d'autre part un boîtier pour recevoir le dispositif de distribution en l'absence d'utilisation de celui-ci. Ce boîtier peut comporter une partie non opaque permettant, lorsque le boîtier est rempli d'un liquide, de lire le niveau du liquide dans celui-ci. Le boîtier est également agencé pour accueillir une quantité de liquide suffisante pour que le dispositif de distribution puisse flotter dans le boîtier au moins lorsqu'il est vide. Le dispositif de distribution et le boîtier peuvent être agencés de telle sorte que le dispositif de distribution soit soumis dans le boîtier à la seule poussée d'Archimède due au liquide contenu dans celui-ci.

Selon un autre de ses aspects, l'invention a encore pour objet, indépendamment ou en combinaison avec ce qui précède, un ensemble comportant d'une part un dispositif de distribution contenant au moins un produit à distribuer et d'autre part un boîtier pour recevoir le dispositif de distribution en l'absence d'utilisation de celui-ci, ce boîtier pouvant comprendre au moins une partie non opaque permettant lorsque le boîtier est rempli d'un liquide de lire le niveau du liquide dans celui-ci. Le boîtier comporte un logement dans lequel est reçu le dispositif de distribution et un deuxième logement pouvant accueillir un accessoire, notamment un peigne. Ce deuxième logement peut être défmi par une colonne dont le pied est séparé du reste du boîtier.

L'invention pourra être mieux comprise à la lecture de la description détaillée qui va suivre, d'exemples de mise en oeuvre non limitatifs de celle-ci, et à l'examen du dessin annexé, sur lequel :

- la figure 1 est une vue schématique en perspective d'un ensemble réalisé conformément à l'invention, couvercle enlevé,
- la figure 2 est une vue de côté de l'ensemble de la figure 1, le couvercle étant en place,
- la figure 3 est une vue de face selon la flèche III de la figure 2,
- la figure 4 est une coupe longitudinale schématique de l'ensemble des figures 2 et 3,

- la figure 5 est une vue analogue à la figure 3, après enlèvement du capot,
- la figure 6 représente une variante de réalisation du boîtier, et
- les figures 7 à 12 illustrent l'utilisation du boîtier.

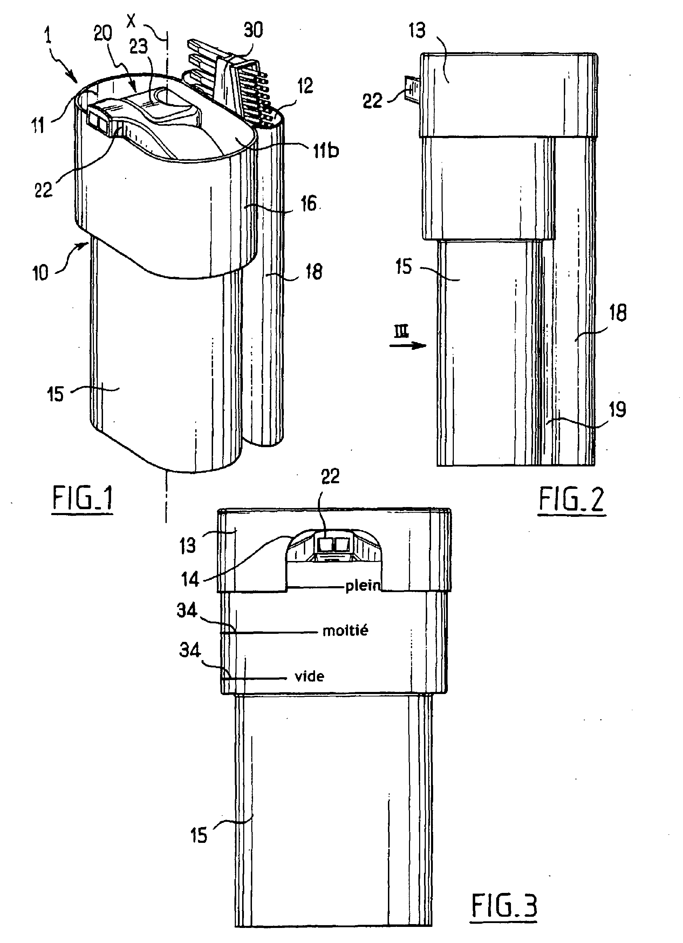

On a représenté à la figure 1 un ensemble 1 comportant un boîtier 10 ayant une forme allongée selon un axe longitudinal X et définissant un logement 11 dans lequel est reçu un contenant, en l'espèce un dispositif de distribution 20.

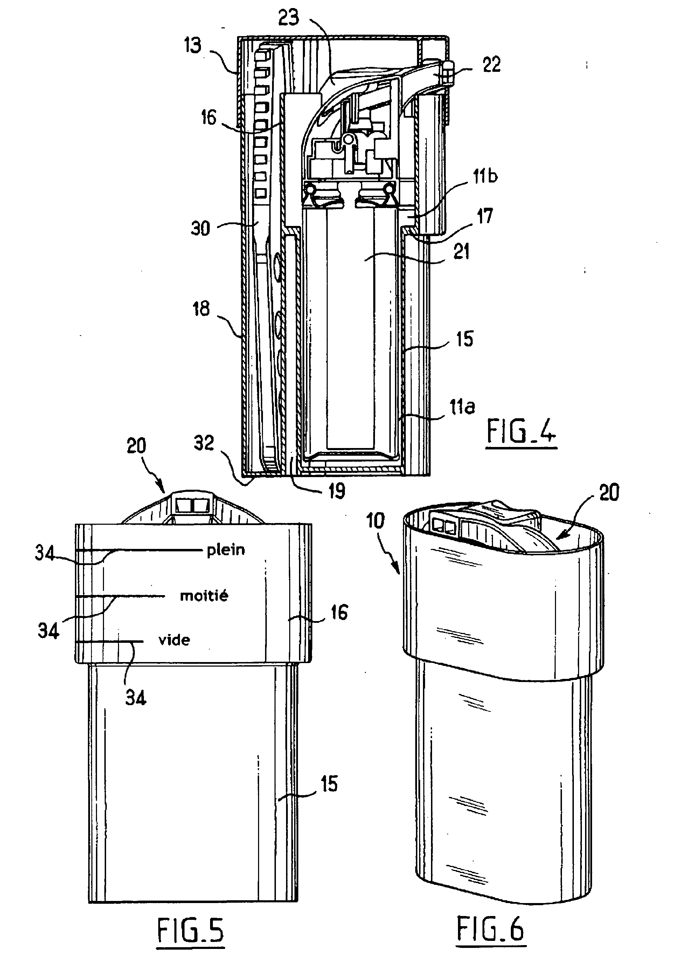

Celui-ci peut comporter par exemple deux récipients pressurisés 21 dont l'un seulement est apparent sur la figure 4, ainsi qu'un mécanisme comportant un embout de distribution 22 et un bouton-poussoir 23 permettant d'agir sur les valves des récipients 21.

Dans l'exemple considéré, le boîtier 10 comporte, outre le premier logement 11, un deuxième logement 12 dans lequel peut être disposé un accessoire 30 tel qu'un peigne, par exemple.

Les logements 11 et 12 peuvent être fermés par un capot 13, comme on peut le voir sur les figures 2 et 3 notamment, ce capot 13 comportant dans l'exemple illustré une ouverture 14 permettant de laisser dépasser l'embout de distribution 22.

Le logement 11 qui reçoit le dispositif de distribution 20 comporte inférieurement une première partie 11a qui est définie par une paroi 15, la section transversale de cette première partie correspondant sensiblement à celle du dispositif de distribution 20.

Le logement 11 comporte supérieurement une deuxième partie 1 1b, élargie, qui est définie par une paroi 16. Les première et deuxième parties se raccordent par un épaulement 17 qui est plus proche de l'extrémité supérieure des récipients 21 du dispositif de distribution 20 que de leur extrémité inférieure.

Dans l'exemple considéré, la première partie 11a défmie par la paroi 15 s'étend sensiblement sur un peu plus des trois-quarts de la hauteur des récipients 21 du dispositif de distribution 20.

La section transversale du logement 11 est oblongue, les parois 15 et 16 étant chacune dans l'exemple considéré sensiblement cylindriques, de génératrices parallèles à l'axe X et de directrices sensiblement homothétiques et non circulaires, chaque directrice étant formée par exemple par deux demi-cercles réunis par des droites parallèles.

Le deuxième logement 12 est défini par une colonne 18 dont la section transversale est oblongue.

La colonne 18 se raccorde uniquement à la paroi 16 précitée, de telle sorte que son pied ménage un espace 19 avec la paroi 15.

L'extrémité inférieure 32 du pied de la colonne 18 est coplanaire avec l'extrémité inférieure de la paroi 15, ce qui permet d'améliorer la stabilité de l'ensemble lorsque celui-ci repose sur une surface plane horizontale.

Le boîtier 10 peut être réalisé dans une matière plastique transparente de façon à permettre à l'utilisateur de visualiser le niveau d'un liquide introduit à l'intérieur, par exemple de l'eau.

Dans une variante non illustrée, le boîtier 10 est recouvert par endroits d'un revêtement, par exemple une peinture ou un film plastique, de façon à ménager une fenêtre d'observation du niveau du liquide dans le boîtier 10.

Sur la face extérieure de la paroi 16 peuvent être inscrits, comme dans l'exemple illustré, des repères 34 se présentant par exemple sous la forme de traits horizontaux.

En fonction du degré de vidage du dispositif de distribution 20, celui-ci déplace une quantité plus ou moins importante de liquide à l'intérieur du boîtier et le niveau du liquide est ainsi représentatif de la quantité de produit encore disponible dans le dispositif de distribution 20.

On a représenté à la figure 6 une variante de réalisation du boîtier 10, dans laquelle celui-ci est dépourvu de colonne 18.

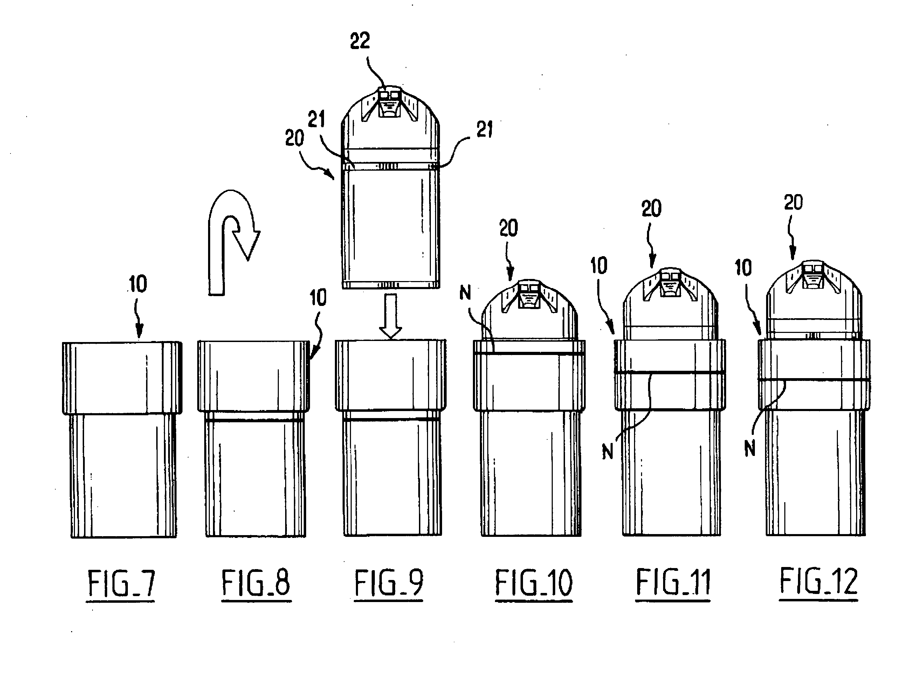

On va maintenant décrire en se référant aux figures 7 à 12 un exemple d'utilisation de l'ensemble 1.

On commence par remplir le boîtier 10 avec de l'eau jusqu'à atteindre un niveau prédéfini, correspondant par exemple à l'épaulement 17, comme illustré sur les figures 8 et 9. Lorsque le dispositif de distribution 20, encore inutilisé, est introduit dans le boîtier 10, comme illustré aux figures 9 et 10, le niveau N du liquide coïncide sensiblement avec le repère 34 supérieur.

Ensuite, au fur et à mesure du vidage du dispositif de distribution 20, le niveau N baisse, comme illustré sur les figures 11 et 12.

L'utilisateur peut ainsi connaître, à chaque fois qu'il replace le dispositif de distribution 20 dans le boîtier 10 entre deux utilisations, en fonction de la hauteur du niveau N, la quantité de produit encore disponible dans le dispositif de distribution 20.

Bien entendu, l'invention n'est pas limitée aux exemples qui viennent d'être décrits.

On peut notamment modifier la forme du boîtier pour l'adapter à un dispositif de distribution 20 qui serait réalisé autrement, qui ne comporterait par exemple qu'un seul récipient pressurisé ou une pompe ou tout autre moyen de prélever le produit contenu à l'intérieur.

Dans toute la description, y compris les revendications, l'expression « comportant un » doit être comprise comme étant synonyme de « comportant au moins un », sauf si le contraire est spécifié.

**Revendications**

1. Ensemble (1) comportant :

   - un dispositif de distribution (20) comportant un embout de distribution et un bouton-poussoir contenant au moins un produit à distribuer, et
   - un boîtier (10) pour recevoir le dispositif de distribution (20) en l'absence d'utilisation de celui-ci, ce boîtier (10) comportant un logement (11) dans lequel est reçu le dispositif de distribution, ce logement présentant une partie inférieure (1 la) et une partie supérieure (11b) élargie relativement à la partie inférieure (11a),

   le boîtier étant agencé pour accueillir une quantité d'un liquide suffisante pour que le dispositif de distribution puisse flotter dans le boîtier au moins lorsqu'il n'est pas complètement plein.

2. Ensemble selon la revendication 1, **caractérisé par le fait que** le boîtier est agencé pour permettre lorsqu'il est rempli de liquide, de lire le niveau du liquide dans celui-ci.

3. Ensemble selon la revendication 2, **caractérisé par le fait que** le boîtier comporte une partie non opaque permettant de lire le niveau de liquide dans le boîtier.

4. Ensemble selon l'une quelconque des revendications 1 à 3, **caractérisé par le fait que** le ratio

$$\frac{\text{section transversale du logement en partie supérieure}}{\text{section transversale du logement en partie inférieure}}$$

   est supérieur à 1,1, mieux 1,2.

5. Ensemble selon l'une des revendications 1 à 4, **caractérisé par le fait que** le boîtier (10) est réalisé d'une seule pièce par moulage de matière plastique, notamment dans une matière plastique transparente.

6. Ensemble selon l'une quelconque des revendications 1 à 5, **caractérisé par le fait que** la partie inférieure présente une section transversale correspondant sensiblement à celle du dispositif de distribution (20).

7. Ensemble selon la revendication 6, **caractérisé par le fait que** le ratio

$$\frac{\text{section transversale du logement (11)}}{\text{section transversale du dispositif de distribution (20)}}$$

   mesuré à sensiblement un quart de la hauteur du logement à partir du fond du logement ou sensiblement à mi-hauteur du logement, n'excède pas 1,5, mieux 1,2, voire 1,1.

8. Ensemble selon l'une quelconque des revendications précédentes, **caractérisé par le fait qu'**il comporte un couvercle (13) agencé pour se monter sur le boîtier (10).

9. Ensemble selon la revendication précédente, **caractérisé par le fait que** le couvercle (13) est pourvu d'une ouverture (14) permettant le passage d'un embout (22) du dispositif de distribution (20).

10. Ensemble selon l'une quelconque des revendications précédentes, **caractérisé par le fait que** le boîtier (10) comporte outre le premier logement (11) pour recevoir le dispositif de distribution (20), un deuxième logement (12) pour recevoir un accessoire (30), notamment un peigne.

11. Ensemble selon la revendication précédente, **caractérisé par le fait que** le deuxième logement (12) est défini par une colonne (18) ayant un pied séparé du reste du boîtier.

**12.** Ensemble selon l'une quelconque des revendications précédentes, **caractérisé par le fait que** le boîtier (10) comporte au moins deux repères (34) correspondant à deux degrés de vidage du dispositif de distribution (20).

**13.** Ensemble selon l'une quelconque des revendications 1 à 12, **caractérisé par le fait que** le dispositif de distribution (20) comporte au moins un récipient, notamment un récipient pressurisé (21).

**14.** Ensemble selon la revendication précédente, **caractérisé par le fait que** le dispositif de distribution (20) comporte au moins deux récipients pressurisés (21) contenant des produits à mélanger extemporanément.

**15.** Ensemble selon l'une des revendications 13 et 14, **caractérisé par le fait que** la partie inférieure s'étend sur une majeure partie de la hauteur du récipient (21), notamment sur plus de trois quarts de la hauteur de celui- ci.

**16.** Ensemble selon l'une quelconque des revendications 1 à 15, **caractérisé par le fait que** la hauteur du boîtier (10) correspond sensiblement à la hauteur du dispositif de distribution, mesurée de son extrémité inférieure jusque sous l'embout de distribution.

**17.** Ensemble selon l'une quelconque des revendications précédentes, **caractérisé par le fait que** le dispositif de distribution est soumis dans le boîtier (10) à la seule poussée d'Archimède due au liquide contenu dans celui-ci.

**Claims**

**1.** Assembly (1) comprising:

- a dispensing device (20) comprising a dispensing nozzle and a push-button and containing at least one product to be dispensed, and
- a case (10) for holding the dispensing device (20) when the latter is not in use, this case (10) comprising a housing (11) in which the dispensing device is held, this housing having a lower part (11a) and an upper part (11b) widened relative to the lower part (11a),

the case being designed to receive a quantity of a liquid which is sufficient for the dispensing device to be able to float in the case at least when it is not completely full.

**2.** Assembly according to Claim 1, **characterized in that** the case is designed to make it possible to read the level of the liquid in the latter when it is filled with liquid.

**3.** Assembly according to Claim 2, **characterized in that** the case comprises a non-opaque part making it possible to read the liquid level in the case.

**4.** Assembly according to any one of Claims 1 to 3, **characterized in that** the ratio

$$\frac{\text{cross section of the upper part of the housing}}{\text{cross section of the lower part of the housing}}$$

is greater than 1.1, better still 1.2.

**5.** Assembly according to one of Claims 1 to 4, **characterized in that** the case (10) is made as a single piece by moulding plastic, particularly in a transparent plastic.

**6.** Assembly according to any one of Claims 1 to 5, **characterized in that** the lower part has a cross section corresponding approximately to that of the dispensing device (20).

**7.** Assembly according to Claim 6, **characterized in that** the ratio

cross section of the housing   (11)

cross section of the dispensing device   (20)

measured at approximately a quarter of the height of the housing from the bottom of the housing or approximately halfway up the housing, does not exceed 1.5, better still 1.2, or even 1.1.

8. Assembly according to any one of the preceding claims, **characterized in that** it comprises a lid (13) designed to be fitted onto the case (10).

9. Assembly according to the preceding claim, **characterized in that** the lid (13) is provided with an opening (14) enabling a nozzle (22) of the dispensing device (20) to pass through.

10. Assembly according to any one of the preceding claims, **characterized in that** the case (10) comprises, apart from the first housing (11) for holding the dispensing device (20), a second housing (12) for holding an accessory (30), particularly a comb.

11. Assembly according to the preceding claim, **characterized in that** the second housing (12) is defined by a column (18) having a foot separated from the rest of the case.

12. Assembly according to any one of the preceding claims, **characterized in that** the case (10) comprises at least two markers (34) corresponding to two degrees of emptying of the dispensing device (20).

13. Assembly according to any one of Claims 1 to 12, **characterized in that** the dispensing device (20) comprises at least one container, particularly a pressurized container (21).

14. Assembly according to the preceding claim, **characterized in that** the dispensing device (20) comprises at least two pressurized containers (21) containing products to be mixed as and when required.

15. Assembly according to either of Claims 13 and 14, **characterized in that** the lower part extends over a major part of the height of the container (21), particularly over more than three quarters of the height of the latter.

16. Assembly according to any one of Claims 1 to 15, **characterized in that** the height of the case (10) corresponds approximately to the height of the dispensing device, measured from its lower end to just below the dispensing nozzle.

17. Assembly according to any one of the preceding claims, **characterized in that** the dispensing device is subjected, in the case (10), solely to the upthrust exerted by the liquid contained in the latter.

**Patentansprüche**

1. Anordnung (1), umfassend:

   - eine Abgabevorrichtung (20), die ein Abgabemundstück und einen Druckknopf umfasst und mindestens ein abzugebendes Produkt enthält, und
   - ein Gehäuse (10) zur Aufnahme der Abgabevorrichtung (20) bei deren Nichtverwendung, wobei das Gehäuse (10) eine Aufnahme (11) umfasst, in der die Abgabevorrichtung aufgenommen ist, wobei diese Aufnahme einen unteren Teil (11a) und einen bezüglich des unteren Teils (11a) verbreiterten oberen Teil (11b) aufweist,

   wobei das Gehäuse dafür ausgebildet ist, eine so große Menge einer Flüssigkeit aufzunehmen, dass die Abgabevorrichtung in dem Gehäuse, mindestens wenn sie nicht vollständig voll ist, schwimmen kann.

2. Anordnung nach Anspruch 1, **dadurch gekennzeichnet, dass** das Gehäuse ausgebildet ist, um, wenn es mit Flüssigkeit gefüllt ist, zu gestatten, den Stand der Flüssigkeit in ihm abzulesen.

3. Anordnung nach Anspruch 1, **dadurch gekennzeichnet, dass** das Gehäuse einen nicht opaken Teil umfasst, der es gestattet, den Flüssigkeitsstand in dem Gehäuse abzulesen.

4. Anordnung nach einem der Ansprüche 1 bis 3, **dadurch gekennzeichnet, dass** das Verhältnis

$$\frac{\text{Querschnitt der Aufnahme im oberen Teil}}{\text{Querschnitt der Aufnahme im unteren Teil}}$$

größer als 1,1, besser 1,2 ist.

5. Anordnung nach einem der Ansprüche 1 bis 4, **dadurch gekennzeichnet, dass** das Gehäuse (10) einstückig durch Formung von Kunststoff insbesondere aus einem transparenten Kunststoff hergestellt ist.

6. Anordnung nach einem der Ansprüche 1 bis 5, **dadurch gekennzeichnet, dass** der untere Teil einen Querschnitt aufweist, der im Wesentlichen dem der Abgabevorrichtung (20) entspricht.

7. Anordnung nach Anspruch 6, **dadurch gekennzeichnet, dass** das Verhältnis

$$\frac{\text{Querschnitt der Aufnahme (11)}}{\text{Querschnitt der Abgabevorrichtung (20)}},$$

gemessen im Wesentlichen auf einem Viertel der Höhe der Aufnahme vom Boden der Aufnahme an oder im Wesentlichen auf halber Höhe der Aufnahme, 1,5, besser 1,2 oder auch 1,1 nicht überschreitet.

8. Anordnung nach einem der vorhergehenden Ansprüche, **dadurch gekennzeichnet, dass** sie einen Deckel (13) umfasst, der dafür ausgelegt ist, auf dem Gehäuse (10) montiert zu werden.

9. Anordnung nach dem vorhergehenden Anspruch, **dadurch gekennzeichnet, dass** der Deckel (13) mit einer Öffnung (14) versehen ist, die den Durchgang eines Mundstücks (22) der Abgabevorrichtung (20) gestattet.

10. Anordnung nach einem der vorhergehenden Ansprüche, **dadurch gekennzeichnet, dass** das Gehäuse (10) abgesehen von der ersten Aufnahme (11) zum Aufnehmen der Abgabevorrichtung (20) eine zweite Aufnahme (12) zum Aufnehmen eines Zubehörs (30), insbesondere eines Kamms, umfasst.

11. Anordnung nach dem vorhergehenden Anspruch, **dadurch gekennzeichnet, dass** die zweite Aufnahme (12) von einer Säule (18) gebildet ist, die einen vom Rest des Gehäuses getrennten Fuß besitzt.

12. Anordnung nach einem der vorhergehenden Ansprüche, **dadurch gekennzeichnet, dass** das Gehäuse (10) mindestens zwei Markierungen (34) umfasst, die zwei Graden der Leerung der Abgabevorrichtung (20) entsprechen.

13. Anordnung nach einem der Ansprüche 1 bis 12, **dadurch gekennzeichnet, dass** die Abgabevorrichtung (20) mindestens einen Behälter, insbesondere einen unter Druck stehenden Behälter (21), umfasst.

14. Anordnung nach dem vorhergehenden Anspruch, **dadurch gekennzeichnet, dass** die Abgabevorrichtung (20) mindestens zwei unter Druck stehende Behälter (21) umfasst, die zum Zeitpunkt des Gebrauchs zu mischende Produkte enthalten.

15. Anordnung nach einem der Ansprüche 13 und 14, **dadurch gekennzeichnet, dass** der untere Teil sich über einen größeren Teil der Höhe des Behälters (21), insbesondere über mehr als drei Viertel seiner Höhe, erstreckt.

16. Anordnung nach einem der Ansprüche 1 bis 15, **dadurch gekennzeichnet, dass** die Höhe des Gehäuses (10) im Wesentlichen der Höhe der Abgabevorrichtung, gemessen von seinem unteren Ende bis zum Abgabemundstück, entspricht.

**17.** Anordnung nach einem der vorhergehenden Ansprüche, **dadurch gekennzeichnet, dass** die Abgabevorrichtung in dem Gehäuse (10) nur dem hydrostatischen Auftrieb ausgesetzt ist, der durch die in ihm enthaltene Flüssigkeit erzeugt wird.

FIG.1

FIG.2

FIG.3

FIG.4

FIG.5

FIG.6

plein

moitié

vide

FIG.12

FIG.11

FIG.10

FIG.9

FIG.8

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2653877

- GB 2348677 A